# EUROPÄISCHE PATENTSCHRIFT

(11) **EP 3 341 262 B1**
(45) Veröffentlichungstag und Bekanntmachung des Hinweises auf die Patenterteilung: **23.10.2019**
(21) Anmeldenummer: 16750142.8
(22) Anmeldetag: 02.08.2016
(51) Int. Cl.: B62D 1/181

(54) **MOTORISCH VERSTELLBARE LENKSÄULE FÜR EIN KRAFTFAHRZEUG**
MOTOR-ADJUSTABLE STEERING COLUMN FOR A MOTOR VEHICLE
COLONNE DE DIRECTION RÉGLABLE CONÇUE POUR UN VÉHICULE AUTOMOBILE

(30) Priorität: 26.08.2015 DE 102015216326
(43) Veröffentlichungstag der Anmeldung: 04.07.2018
(73) Patentinhaber: ThyssenKrupp Presta AG, 9492 Eschen (LI); thyssenkrupp AG, 45143 Essen (DE)
(72) Erfinder: HEITZ, Thomas, 9493 Mauren (LI); KREUTZ, Daniel, 6800 Feldkirch (AT); SINIS JÁUREGUI, Francisco, 6800 Feldkirch (AT)
(74) Vertreter: thyssenkrupp Intellectual Property GmbH
(86) Internationale Anmeldenummer: PCT/EP2016/068393
(87) Internationale Veröffentlichungsnummer: WO 2017/032566

(56) Entgegenhaltungen:
- EP-A1- 2 808 225
- EP-A2- 2 508 409
- US-A1- 2006 028 010

## Beschreibung

### Stand der Technik

Die Erfindung betrifft eine motorisch verstellbare Lenksäule für ein Kraftfahrzeug, umfassend eine mit einer Fahrzeugkarosserie verbindbare Trageinheit, von der eine Stelleinheit gehalten wird, die eine in einer Manteleinheit um eine Längsachse drehbar gelagerte Lenkspindel umfasst, wobei die Manteleinheit ein äußeres Mantelrohr aufweist, in dem ein inneres Mantelrohr teleskopierend axial verschiebbar aufgenommen ist, und mit einem linearen Stellantrieb, der mit dem inneren und dem äußeren Mantelrohr verbunden ist und von dem das innere Mantelrohr relativ zum äußeren Mantelrohr axial ein- und ausfahrbar ist.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist in einer Stelleinheit drehbar gelagert, die an der Fahrzeugkarosserie über eine Trageinheit gelagert ist, welche beispielsweise zur Verbindung mit der Fahrzeugkarosserie Konsolenteile umfasst, welche die Stelleinheit halten. Verstellbare Lenksäulen ermöglichen die Verstellung relativ zur Fahrzeugkarosserie und damit eine Anpassung der Lenkradposition an die Fahrerposition.

Eine Verstellbarkeit in Längsrichtung, d.h. in Achsrichtung der Lenkspindel, zur Längsverstellung des Lenkrads kann dadurch realisiert werden, dass die Stelleinheit in ihrer Länge veränderbar ausgestaltet ist, beispielsweise durch eine in der Längsrichtung teleskopierbare Anordnung von Mantelrohren, die im Stand der Technik beispielsweise in der DE 10 2014 101 995 A1 oder der DE 10 2008 005 256 B4 beschrieben ist. Daraus geht eine Stelleinheit mit einem inneren Mantelrohr hervor, welches in Achsrichtung gleitbeweglich in einem äußeren Mantelrohr gelagert ist. Zur Verstellung in Richtung zur Fahrerposition hin kann das innere Mantelrohr teleskopierend aus dem äußeren Mantelrohr herausbewegt werden, und entsprechend zur Verstellung in Richtung von der Fahrerposition weg in das äußere Mantelrohr eingefahren werden.

Es ist im Stand der Technik bekannt, für die Ausführung der Verstellbewegung der Stelleinheit relativ zur Trageinheit einen motorischen Stellantrieb vorzusehen, der beispielsweise einen Elektromotor umfasst, der über ein Getriebe an die Stelleinheit angekoppelt ist und eine elektrische Steuerung der Lenkradpositionierung ermöglicht.

Für die Längsverstellung wird ein linearer motorischer Stellantrieb zwischen dem inneren und äußeren Mantelrohr eingesetzt. Durch den Stellantrieb können die Mantelrohre in Richtung der Längsachse relativ zueinander translatorisch bewegt werden, so dass das innere Mantelrohr relativ zum äußeren Mantelrohr teleskopierend aus- oder eingefahren wird. Der Stellantrieb kann beispielsweise durch einen Spindeltrieb realisiert werden, der eine auf eine Gewindespindel aufgeschraubte Spindelmutter umfasst, die von einem Elektromotor relativ zueinander zur Spindel drehend antreibbar ist. Für die Funktion ist dabei maßgeblich, dass die Mantelrohre in beiden Längsrichtungen leichtgängig zueinander bewegt werden können, d.h. hinreichend reibungsarm gleiten, so dass sie zum Ein- und Ausfahren von dem Stellantrieb zuverlässig bewegt werden können.

Ein Vorteil motorisch verstellbarer Lenksäulen liegt in der Erhöhung des Fahr- und Bedienkomforts, indem beispielsweise für verschiedene Fahrer individuelle Lenkradpositionen elektronisch gespeichert und bei Bedarf automatisch abgerufen und eingestellt werden können. Von besonderem Interesse ist es weiterhin, dass die Lenksäule in bestimmten Betriebssituationen automatisiert in vorgegebene Positionen gebracht wird. Beispielsweise ist beim autonomen Fahren während der Fahrt kein manueller Lenkeingriff durch den Fahrer erforderlich, so dass das Lenkrad prinzipiell außerhalb der Bedienposition verstaut werden kann, um den dadurch freiwerdenden Fahrzeuginnenraum alternativ nutzen zu können. Eine derartige verstaubare Lenksäule ist beispielsweise in der DE 20 2014 101 156 beschrieben.

Aus der EP 2 508 409 A2 und der EP 2 808 225 A1 sind gattungsgemäße Lenksäulen der eingangs genannten Art bekannt. Diese benötigen jedoch einen relativ großen Einbauraum, um einen ausreichend großen Verstellbereich zu gewährleisten.

Die bekannten motorisch längsverstellbaren Lenksäulen ermöglichen zwar durch Einfahren des inneren Mantelrohrs eine Verkürzung der Stelleinheit, so dass im eingefahrenen Zustand relativ zur Fahrerposition Raum frei wird. Nachteilig ist jedoch, dass die bekannten Lenksäulen sich entweder zum Verstauen nicht weit genug einfahren lassen, oder zur Realisierung eines ausreichenden Verstellwegs im eingefahrenen Zustand in Längsrichtung relativ große Abmessungen haben.

Angesichts der vorangehend erläuterten Problematik ist es eine Aufgabe der vorliegenden Erfindung, eine motorisch verstellbare Lenksäule zur Verfügung zu stellen, welche einen vergrößerten Verstellbereich bei geringen Abmessungen in eingefahrenen Zustand ermöglicht.

### Darstellung der Erfindung

Zur Lösung der vorgenannten Problematik wird erfindungsgemäß vorgeschlagen, dass koaxial zwischen dem äußeren Mantelrohr und dem inneren Mantelrohr zumindest ein Zwischenmantelrohr (mittleres Mantelrohr) angeordnet ist, das in dem äußeren Mantelrohr reibungsarm teleskopierend axial verschiebbar aufgenommen ist und in dem das innere Mantelrohr reibungsarm teleskopierend axial verschiebbar gelagert ist.

Erfindungsgemäß hat die motorisch verstellbare Lenksäule mindestens ein zusätzliches Mantelrohr, nämlich ein Zwischenmantelrohr, auch mittleres Mantelrohr genannt, welches relativ zum inneren und äußeren Mantelrohr in Richtung der Längsachse teleskopierbar ist. Dadurch, dass mindestens drei Mantelrohre ineinander teleskopierbar angeordnet sind, kann bei einer motorisch verstellbaren Lenksäule ein größerer relativer Verstellweg, der das Verhältnis der Längen im maximal ausgefahrenen Zustand zum maximal eingefahrenen Zustand bezeichnet, realisiert werden, als bei einer bekannten motorisch verstellbaren Lenksäule mit lediglich zwei Mantelrohren. Bei zwei Mantelrohren kann nämlich für den relativen Verstellweg der Teleskopanordnung ein theoretisch maximaler Wert von 2 erreicht werden, also eine Verkürzung um die Hälfte, während bei drei Mantelrohren ein theoretisch maximaler Wert von 3 erreicht werden kann, also eine Verkürzung auf ein Drittel. In der Praxis kann der theoretische maximale Wert, der von vollständig ineinander eingetauchten und von vollständig auseinander gezogenen Mantelrohren ausgeht, zwar nicht erreicht werden, da zur Gewährleistung einer ausreichenden Biegesteifigkeit der teleskopierenden Anordnung die Mantelrohre auch im maximal ausgefahrenen Zustand über einen Längenabschnitt koaxial ineinander gelagert sein müssen, und in maximal eingefahrenen Zustand in Längsrichtung überstehen. Durch den erfindungsgemäßen Einsatz einer drei- oder mehrteiligen Teleskopanordnung kann jedoch in der Praxis ein deutlich längerer relativer Verstellweg als bei den gattungsgemäßen motorisch verstellbaren Lenksäulen realisiert werden. Dadurch ist es möglich, für einen gegebenen Verstellweg, der in einer Anwendung beispielsweise eines autonom fahrenden Fahrzeugs gefordert wird, kompaktere Abmessungen der Lenksäule im eingefahrenen Zustand als im Stand der Technik zu verwirklichen, so dass zum Verstauen der Lenksäule weniger Stauraum erforderlich ist.

Die ineinander gelagerten Mantelrohre sind bei der Erfindung bezüglich ihrer relativen Gleitbewegung in Längsrichtung reibungsarm ausgestaltet, so dass die Summe der zum Ein- oder Ausfahren zu überwindenden Reibungskräfte - Haft- und Gleitreibung - zwischen den Mantelrohren kleiner ist als die von dem Stellantrieb auf die Mantelrohre ausgeübte translatorische Antriebskraft. Unter "reibungsarm" wird ein vorherrschender Gleitreibungskoeffizient zwischen den jeweiligen Reibpartnern, also in diesem Fall den jeweils miteinander in Kontakt stehenden Mantelrohren, mit einem Wert kleiner oder gleich 0,15 verstanden. Dadurch können die Mantelrohre derart leichtgängig bewegt werden, dass die Lenksäule von dem Stellantrieb jederzeit zuverlässig in jede geforderte Verstellposition gebracht werden können. Diese Anforderung ist insbesondere für den Einsatz in einem autonom fahrenden Fahrzeug vorteilhaft, bei dem das Lenkrad aus einer verstauten Position während der Fahrt jederzeit schnell und sicher in eine Bedienposition im Zugriffsbereich des Fahrers ausfahrbar sein muss.

In einer vorteilhaften Weiterbildung kann vorgesehen sein, dass die Manteleinheit eine minimale Länge und eine maximale Länge aufweist und das Zwischenmantelrohr um einen maximalen axialen Weg verschiebbar ist, wobei ein Verhältnis aus dem maximalen axialen Weg zu der Differenz aus der maximalen Länge und der minimalen Länge einen Wert zwischen 0,2 und 0,8 aufweist. Somit kann erreicht werden, dass die Manteleinheit noch eine ausreichende Biegesteifigkeit aufweist, da die einzelnen Mantelrohre - nämlich äußeres Mantelrohr, inneres Mantelrohr und Zwischenmantelrohr - der Manteleinheit sich noch ausreichend in axialer Richtung überlappen oder mit anderen Worten noch ausreichend ineinander aufgenommen sind.

Die Differenz aus der maximalen Länge und der minimalen Länge der Manteleinheit entspricht dem maximalen teleskopierbaren Weg der Manteleinheit, mit anderem Worten der Weg zwischen der voll ausgefahren Position und der voll eingefahrenen Position der Manteleinheit. Somit ergibt sich das Verhältnis aus dem Verhältnis des maximalen axial verschiebbaren Wegs des Mantelrohr zu dem maximalen teleskopierbaren Weg der Manteleinheit.

Besonders bevorzugt liegt der Wert des Verhältnises zwischen 0,3 und 0,7.

Bei der Erfindung kann vorgesehen sein, dass das Zwischenmantelrohr und das innere und/oder äußere Mantelrohr auf ihren jeweils einander gegenüberliegenden Mantelflächen reibungsarm ausgestaltet sind. Die beim teleskopierenden Ein- und Ausfahren einander zugewandten, aufeinander gleitenden inneren und äußeren Mantelflächen bestimmen durch ihre relativen Abmessungen, das Material und die Oberflächenbeschaffenheit die Reibungskräfte, die von dem motorischen Stellantrieb zum Verstellen der Lenksäule in bzw. entgegen der Längsrichtung überwunden werden müssen. Die dabei relativ zueinander bewegten Kontakt- bzw. Gleitflächen können innen und/oder außen mit einer reibungsmindernden Beschichtung versehen sein, beispielsweise mit einer abriebfesten Hartstoffbeschichtung und/oder einer dauerhaft gleitfähigen Kunststoffschicht. Alternativ oder zusätzlich kann Schmierstoff eingebracht werden, und/oder Gleitstücke oder Gleitbuchsen zwischen den Mantelrohren beispielsweise aus PTFE. Auf diese Weise kann gewährleistet werden, dass die Reibungskräfte zur Verstellung der Lenksäule auch nach einer Vielzahl von Verstellbewegungen, wie sie beispielsweise beim autonomen Fahren über die Nutzungsdauer eines Fahrzeugs zu erwarten ist, in einem Bereich bleiben, der eine sichere Verstellung der Lenksäule mittels des motorischen Stellantriebs gewährleistet.

Eine vorteilhafte Weiterbildung der Erfindung sieht vor, dass bezüglich einer axialen Verschiebung eine erste Reibungskraft zwischen dem Zwischenmantelrohr und dem äußeren Mantelrohr kleiner ist als eine zweite Reibungskraft zwischen dem Zwischenmantelrohr und dem inneren Mantelrohr. Durch die unterschiedliche Einstellung der Reibungskräfte kann die Reihenfolge der teleskopierenden Bewegung der einzelnen Mantelrohre relativ zueinander beim Ein- und Ausfahren festgelegt werden. Bei der translatorischen Relativbewegung von innerem und äußerem Mantelrohr mittels des motorischen Stellantriebs wird das Zwischenmantelrohr durch die wirkenden Reibungskräfte in Längsrichtung mitgenommen. Dadurch, dass die erste Reibungskraft kleiner ist, wird sie bei einer relativen Bewegung zuerst überwunden, und folglich wird beim Ein- oder Ausfahren zuerst das Zwischenmantelrohr relativ zum äußeren Mantelrohr ein- oder ausgefahren. Wenn dieser Bewegungsweg begrenzt wird, beispielsweise durch einen Längsanschlag, wird die größere zweite Reibungskraft von dem Stellantrieb überwunden und das innere Mantelrohr relativ zum Zwischenmantelrohr teleskopiert. Folglich ergibt sich ein definiertes Verhalten beim Ein- und Ausfahren, welches im Hinblick auf die Stabilität der Teleskopanordnung optimiert werden kann. Alternativ oder zusätzlich können in Längsrichtung Abschnitte mit zwei oder mehr voneinander unterschiedlichen Reibungskräften ausgebildet sein, die bezüglich der wirkenden Reibungskraft in ansteigender Reihenfolge beim Ein- oder Ausfahren der Teleskopanordnung in Längsrichtung relativ zueinander bewegt werden.

Es ist ebenfalls alternativ denkbar, dass die kleinere erste Reibungskraft zwischen dem inneren Mantelrohr und dem Zwischenmantelrohr vorgegeben wird, so dass zuerst das innere Mantelrohr aus dem Zwischenmantelrohr ausgefahren wird, und wenn dieses vollständig ausgefahren ist das Zwischenmantelrohr von dem inneren Mantelrohr mitgenommen und aus dem äußeren Mantelrohr herausbewegt wird.

Es kann vorgesehen sein, dass das Zwischenmantelrohr auf seiner Außenseite ein nach außen vorstehendes Außenanschlagelement aufweist, und das äußere Mantelrohr ein nach innen vorstehendes Innenanschlagelement, wobei der Durchgangsquerschnitt des Innenanschlagelements größer ist als der Querschnitt des Zwischenmantelrohrs und kleiner als der Querschnitt des Außenanschlagelements des Zwischenmantelrohrs. Das Außen- und Innenanschlagelement bilden Anschlagelemente in Längsrichtung, durch die der maximale Verstellweg des Zwischenmantelrohrs, nämlich der maximale Auszug beim Ausfahren der Stelleinheit, relativ zum äußeren Mantelrohr begrenzt wird. Das Zwischenmantelrohr kann zum Ein- und Ausfahren in Längsrichtung teleskopierend durch das Innenanschlagelement hindurch bewegt werde, bis die Endposition dadurch begrenzt wird, dass das in Fahrtrichtung am vorderen Ende des Zwischenmantelrohrs angeordnete, nach außen radial überstehende Außenanschlagelement in axialer Richtung gegen das Innenanschlagelement zur Anlage kommt, welches sich am in Fahrtrichtung hinteren Endbereich des äußeren Mantelrohrs befindet. Somit bilden die zusammenwirkenden, jeweils an den einander zugewandten Enden des Zwischenmantelrohrs und des äußeren Mantelrohrs angeordneten Anschlagelemente ebenfalls eine Auszugsicherung, die verhindert, dass die Mantelrohre in Längsrichtung voneinander getrennt werden.

Entsprechend kann vorgesehen sein, dass das Zwischenmantelrohr auf seiner Innenseite ein nach innen vorstehendes Innenanschlagelement aufweist, und das innere Mantelrohr ein nach außen vorstehendes Außenanschlagelement, wobei der Durchgangsquerschnitt des Innenanschlagelements größer ist als der Querschnitt des inneren Mantelrohrs und kleiner als der Querschnitt des Außenanschlagelements des inneren Mantelrohrs. Das Innenmantelrohr kann zum Ein- und Ausfahren in Längsrichtung teleskopierend durch das Innenanschlagelement hindurch bewegt werde, bis die Endposition dadurch begrenzt wird, dass das in Fahrtrichtung am vorderen Ende des Innenmantelrohrs angeordnete, nach außen radial überstehende Außenanschlagelement in axialer Richtung gegen das Innenanschlagelement zur Anlage kommt, welches sich am in Fahrtrichtung hinteren Endbereich des Zwischenmantelrohrs befindet.Dadurch wird ein zwischen dem Zwischenmantelrohr und dem inneren Mantelrohr wirkender Längsanschlag gebildet. Die jeweils an den einander zugewandten Enden des Zwischenmantelrohrs und des inneren Mantelrohrs angeordneten Anschlagelemente dienen darüber hinaus als Auszugsicherung.

Die vorangehend beschriebenen Anschlagelemente - Innen- und Außenanschlagelemente - sorgen insbesondere beim Ausfahren der Lenksäule, also beim teleskopierenden Herausbewegen dafür, dass, wenn das Zwischenmantelrohr am äußeren Mantelrohr anschlägt, das Innenmantelrohr aus dem Zwischenmantelrohr herausbewegt wird - oder - in umgekehrter Reihenfolge zuerst das innere Mantelrohr ausgefahren wird und beim Anschlag das Zwischenmantelrohr mitnimmt und aus dem äußeren Mantelrohr herausbewegt. Die Reihenfolge kann - wie oben beschrieben - beispielsweise durch unterschiedlich vorgegebene Reibungskräfte zwischen den Mantelrohren vorgegeben werden. Die Innen- und Außenanschlag-elemente bilden Mitnehmer, durch die das erfindungsgemäße Zwischenmantelrohr beim teleskopierenden Ausfahren vom inneren bzw. äußeren Mantelrohr in Richtung der Längsachse mitgenommen wird. Bei einer Anordnung mit zwei oder mehr ineinander teleskopierend angeordneten Zwischenmantelrohren zur Erreichung eines größeren relativen Verstellwegs können die Zwischenmantelrohre jeweils entsprechende Innen- und Außenanschlagelemente haben, durch die ein Zwischenmantelelement von einem darin teleskopierenden Zwischenmantelelement mitgenommen werden kann.

Ein Innenanschlagelement kann realisiert werden durch einen in den freien Durchgangsquerschnitt eines Mantelrohrs radial nach innen vorstehenden Vorsprung, der als umlaufende Stufe, als Bund oder Kragen ausgebildet sein kann, oder durch eine Mehrzahl von einzelnen Vorsprüngen. Entsprechend kann ein Außenanschlagelement durch einen radial nach außen vorstehenden Vorsprung gebildet werden. Wesentlich ist dabei, dass sich die Anschlagelemente bezüglich der Richtung des Ausfahrens axial gegeneinander abstützen können, um den Auszug in Richtung der Längsachse zu begrenzen.

In einer vorteilhaften Weiterbildung ist das Zwischenmantelrohr und das innere Mantelrohr mittels einer Rastvorrichtung verbindbar, wobei die Rastvorrichtung einen Rastkörper, der mit dem Zwischenmantelrohr verbunden ist, und einem zum Rastkörper korrespondierenden Gegenrastkörper, der mit dem inneren Mantelrohr verbunden ist, umfasst. Durch die Rastvorrichtung kann erreicht werden, dass das Zwischenmantelrohr und das innere Mantelrohr synchron aus dem äußeren Mantelrohr heraus teleskopieren, da das Zwischenmantelrohr und das innere Mantelrohr mittels der Rastvorrichtung verbunden sind. Sobald der maximale axial teleskopierbare Weg des Zwischenmantelrohrs erreicht ist, beispielsweise durch das Anschlagen des Außenanschlagelements des Zwischenmantelrohrs an das Innenanschlagelements des äußeren Mantelrohrs, erfolgt ein Ausrasten des Gegenkörpers aus dem Rastkörper. Somit wird die unabhängige Teleskopierbarkeit des inneren Mantelrohrs gegenüber dem Zwischenmantelrohr freigegeben, so dass eine relative Verschiebung des inneren Mantelrohrs gegenüber dem äußeren Mantelrohr erfolgen kann. Das Einrasten von Rastkörper und Gegenrastkörper erfolgt, sobald das innere Mantelrohr wieder vollständig in das Zwischenmantelrohr hinein teleskopiert ist. Dies kann bevorzugt dadurch erfolgen, dass der Rastkörper zumindest eine Federzunge umfasst. Bevorzugt weist die Federzunge eine Kontaktgeometrie auf, welche mit dem Gegenrastkörper einrasten kann, und die so ausgebildet ist, dass zum Ausrasten eine höhere Kraft in axialer Richtung erforderlich ist als zum Einrasten. Dies kann durch unterschiedliche Winkel zwischen den Kontaktflächen und der Längsachse der Lenkspindel in Einfahr- und in Ausfahrrichtung erreicht werden. Eine höhere axiale Kraft zum Ausrasten ist erforderlich, wenn die Kontaktfläche steiler, d.h. in stumpfem Winkel zur Längsachse steht, während eine geringere Kraft erforderlich ist, wenn die Kontaktfläche flacher, d.h. in relativ spitzem Winkel zur Längsachse steht.

Weiterhin ist es möglich, dass der Stellantrieb mit dem Zwischenmantelrohr wirkverbunden ist zur Zwangspositionierung des Zwischenmantelrohrs relativ zum inneren und/oder äußeren Mantelrohr. Während in den vorangehend beschriebenen Ausführungen das Zwischenmantelrohr beim Ausfahren von einem der beiden anderen Mantelrohre in axialer Richtung mitgenommen wird, kann alternativ oder zusätzlich vorgesehen sein, dass das Zwischenmantelrohr direkt durch den Stellantrieb in definierter Weise bewegt wird. Dadurch kann beispielsweise realisiert werden, dass das innere Mantelrohr gleich weit aus dem Zwischenmantelrohr ausgefahren wird, wie das Zwischenmantelrohr aus dem äußeren Mantelrohr, d.h. die Bewegung des Zwischenmantelrohrs kann unabhängig vom Erreichen eines Anschlags vorgegeben werden. Hierzu kann der Stellantrieb zum Beispiel Spindeltriebe mit zwei unterschiedlichen Gewindesteigungen aufweisen, die am Zwischenmantelrohr und an einem der beiden Mantelrohre angreifen, oder Hebelgetriebe, oder Zahnstangengetriebe, oder Seilzug-/Kettengetriebe oder dergleichen.

Weiterhin ist es vorteilhaft, dass der Stellantrieb einen Spindeltrieb umfasst mit einer auf einer Schraubspindel angeordneten Spindelmutter, und einem motorischen Antrieb, von dem die Schraubspindel und die Spindelmutter relativ zueinander drehend antreibbar sind. Derartige Stellantriebe sind im Stand der Technik prinzipiell bekannt und gelten als zuverlässig und robust. Dabei ist die Spindelmutter an dem einen Mantelrohr in Richtung der Längsachse unverschieblich angebracht, und die Schraubspindel an dem dazu teleskopierbaren anderen Mantelrohr. Von einem elektrischen Stellmotor wird über ein geeignetes Getriebe, beispielsweise ein Schnecken- oder Riemengetriebe, die Spindelmutter oder die Schraubspindel drehend angetrieben, wodurch die relativ dazu bezüglich der Drehung feststehende Schraubspindel oder Spindelmutter translatorisch in Richtung der Spindellängsachse bewegt wird. Wie erwähnt ist es auch denkbar, Schraubspindeln und Spindelmuttern mit unterschiedlichen Gewindesteigungen vorzusehen, um das erfindungsgemäße Zwischenmantelrohr direkt von dem Spindeltrieb zu bewegen.

Es kann weiterhin vorgesehen sein, dass die Stelleinheit an der Trageinheit um eine quer zur Längsachse liegende Schwenkachse höhenverschwenkbar gelagert ist. Durch die Verschwenkung um eine derartige horizontale Schwenkachse kann eine Höhenverstellung realisiert werden, bei der das am hinteren Ende der Lenkspindel angebrachte Lenkrad in der Höhe relativ zur Fahrerposition eingestellt werden kann.

Die vorgenannte Höhenverstellung kann manuell erfolgen. Insbesondere zum automatisierten Verstauen der Lenksäule beim autonomen Fahren ist es vorteilhaft, dass ein elektrischer Höhen-Stellantrieb mit der Trageinheit und der Stelleinheit verbunden ist, von dem die Stelleinheit relativ zur Trageinheit um die Schwenkachse bewegbar ist. Der Höhen-Stellantrieb ist an sich ebenfalls bekannt und kann beispielsweise als elektromotorisch angetriebener Spindeltrieb realisiert werden, wie vorangehend für die Längsverstellung beschrieben.

Ebenfalls ist es denkbar und möglich, dass die Mantelrohre ein nicht-kreiszylindrisches Querschnittsprofil aufweisen, beispielsweise ein Dreikant-,Vierkant-, Fünfkant-, Sechskant, Siebenkant- oder Achtkant-Querschnittsprofil, wobei diese Aufzählung beliebig fortgeführt werden kann.

Weiterhin ist es denkbar und möglich, dass zur Minimierung der Reibung zwischen den Mantelrohren Wälzkörper angeordnet sind, wobei die Wälzkörper, bevorzugt Kugeln und/oder Zylinderrollen, bevorzugt in einer Zwischenhülse aufgenommen und geführt werden können.

Weiterhin ist es ebenfalls möglich, zwischen den Mantelrohren zumindest ein Gleitelement anzuordnen, beispielsweise eine Gleithülse. Dadurch kann die Reibung angepasst bzw. verringert und die Teleskopierbarkeit der Mantelrohre zueinander verbessert werden. Die Kalibrierung der Gleithülse zur Einstellung der Reibkraft kann während der Montage der Mantelrohre beispielsweise durch Ultraschallschweissen erfolgen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in teilweise ausgefahrenem Zustand in einer schematischen perspektivischen Ansicht,
- Figur 2: die Lenksäule gemäß Figur 1 in zusammengefahrenem Zustand,
- Figur 3: die Lenksäule gemäß Figur 1 in einer anderen perspektivischen Ansicht,
- Figur 4: einen Querschnitt durch die erfindungsgemäße Lenksäule gemäß Figur 1,
- Figur 5: einen Längsschnitt entlang der Längsachse durch die erfindungsgemäße Lenksäule gemäß Figur 1,
- Figur 6: eine Manteleinheit aus dem Stand der Technik,
- Figur 7: schematische Darstellung der erfindungsgemäßen Manteleinheit,
- Figur 8: eine schematische Schnittdarstellung der Manteleinheit mit einer Rastvorrichtung im eingerasteten Zustand, und
- Figur 9: eine schematische Schnittdarstellung der Manteleinheit mit einer Rastvorrichtung im ausgerasteten Zustand.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

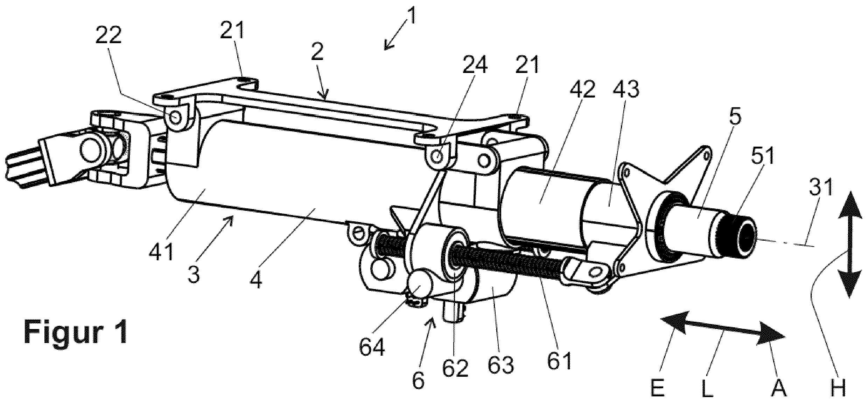

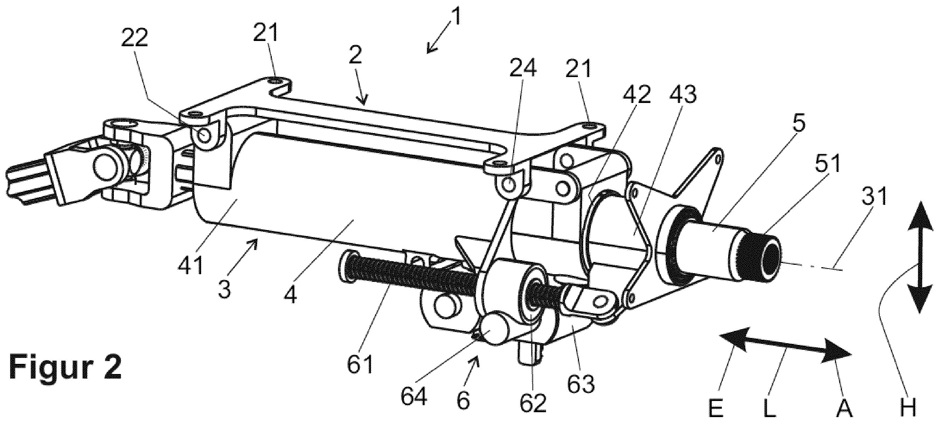

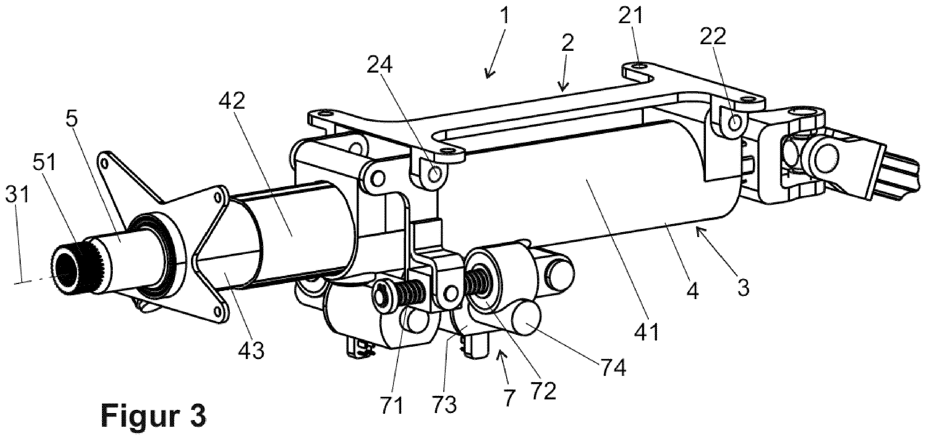

Figuren 1, 2 und 3 zeigen eine erfindungsgemäße Lenksäule 1 in schematischen perspektivischen Ansichten von seitlich oben schräg auf das hintere Ende, bezüglich der Fahrtrichtung eines nicht dargestellten Fahrzeugs. Figur 2 zeigt den vollständig eingefahrenen Zustand, Figuren 1 und 3 einen (teilweise) ausgefahrenen Zustand, von der linken Seite (Figur 1) sowie von der rechten Seite (Figur 3).

Die Lenksäule 1 umfasst eine Trageinheit 2, die Befestigungsmittel 21 aufweist zur Verbindung mit einer nicht dargestellten Kraftfahrzeug-Karosserie. Von der Trageinheit 2 wird eine Stelleinheit 3 gehalten, die eine Manteleinheit 4 umfasst, in der um eine Längsachse 31 der Stelleinheit 3 drehbar eine Lenkspindel 5 gelagert ist. An dem bezüglich der Fahrtrichtung hinteren Ende ist die Lenkspindel 5 mit einem Befestigungsabschnitt 51 zur Anbringung eines hier nicht dargestellten Lenkrads versehen.

In ihrem vorderen Endbereich ist die Manteleinheit 4 um eine quer zur Längsachse 31 liegende, horizontale Schwenkachse 22 verschwenkbar an der Trageinheit 2 gelagert. Im hinteren Endbereich ist die Manteleinheit 4 über einen Stellhebel 23 mit der Trageinheit 2 verbunden. Eine Drehbewegung des Stellhebels 23 um die Achse 24 bewirkt ein Verschwenken der Stelleinheit 3 um die Schwenkachse 22, und damit zu einer Verstellung des Lenkrads in Höhenrichtung H, was mit dem Doppelpfeil angedeutet ist.

Die Manteleinheit 4 umfasst in der dargestellten Ausführungsform ein äußeres Mantelrohr 41, ein Zwischenmantelrohr 42 und ein inneres Mantelrohr 43. In dem äußeren Mantelrohr 41, welches bezüglich der Längsachse 31 in Längsrichtung L unverschiebbar an der Trageinheit 2 gelagert ist, sind das Zwischenmantelrohr 42 und das innere Mantelrohr 43 koaxial ineinander angeordnet und in Längsrichtung L parallel zur Längsachse 31 teleskopierend ein- und ausfahrbar angeordnet, was mit dem Doppelpfeil angedeutet ist. Dabei erfolgt das Ausfahren nach hinten in Ausfahrrichtung A, und das Einfahren entsprechend in entgegengesetzter Richtung nach vorn in Einfahrrichtung E.

Zur Längsverstellung, d.h. zum Ein- und Ausfahren, ist ein elektromotorischer Stellantrieb 6 vorgesehen. Dieser ist als Spindeltrieb ausgebildet und umfasst eine Schraubspindel 61, die sich parallel zur Längsachse 31 erstreckt und die mit ihrem hinteren Ende drehfest an dem inneren Mantelrohr 43 angebracht ist. Eine Spindelmutter 62 ist auf die Schraubspindel 61 aufgeschraubt und von einem elektrischen Stellmotor 63 über ein Getriebe 64 drehend antreibbar, welches beispielsweise als Schneckengetriebe ausgebildet sein kann. Zusammen mit dem Getriebe 64 ist die Spindelmutter 62 bezüglich der Längsrichtung L fest, d.h. unverschiebbar mit dem äußeren Mantelrohr 41 verbunden, so dass eine Drehung je nach Drehrichtung eine Translation der Schraubspindel 61 in Einfahrrichtung E oder in Ausfahrrichtung A und damit ein Ein- oder Ausfahren des inneren Mantelrohrs 43 relativ zum Zwischenmantelrohr 42 und äußeren Mantelrohr 41 bewirkt.

Erfindungsgemäß sind das innere Mantelrohr 43 in dem Zwischenmantelrohr 42 sowie das Zwischenmantelrohr 42 in dem äußeren Mantelrohr 41 in Längsrichtung L, d.h. in Einfahrrichtung E und in Ausfahrrichtung A, reibungsarm verschiebbar gelagert. Reibungsarm meint, dass die teleskopierende Bewegung der Mantelrohre 41, 42 und 43 so leichtgängig erfolgt, dass die von dem Stellantrieb 6 zur Verfügung gestellte axiale Stellkraft jederzeit zum schnellen Ein- oder Ausfahren ausreicht. Um dies zu gewährleisten, können die aufeinander gleitenden Kontaktflächen auf der Innenseite des äußeren Mantelrohrs 41, der Außenseite des inneren Mantelrohrs 43 und/oder beiden Mantelflächen des Zwischenmantelrohrs 42 reibungsarm ausgestaltet werden, wie dies weiter oben beschrieben ist.

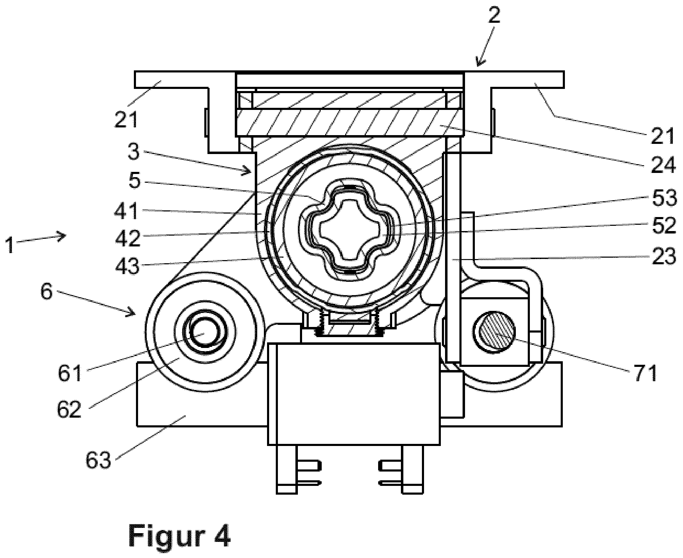

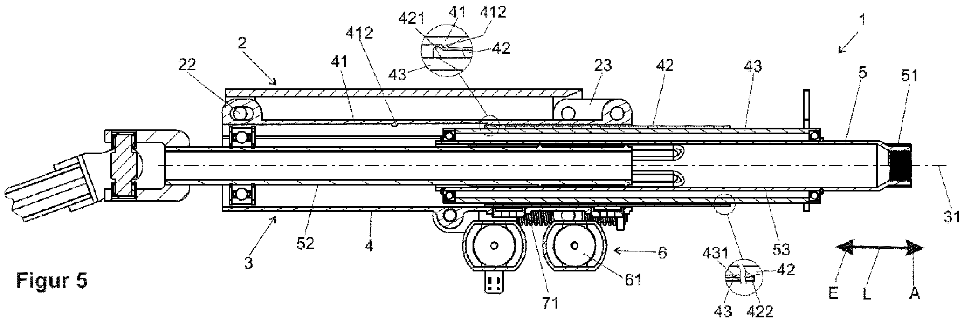

Die koaxiale Anordnung von inneren Mantelrohr 43, Zwischenmantelrohr 42 und äußerem Mantelrohr 41 ist besonders deutlich der Querschnittdarstellung in Figur 4 entnehmbar. Anhand des in Figur 5 gezeigten Längsschnitts ist erkennbar, dass das innere Mantelrohr 43 an seinem vorderen Ende ein Außenanschlagelement 431 aufweist, welches als auf der Außenseite radial vorstehender, umlaufender Vorsprung ausgebildet ist, und das äußere Mantelrohr 41 an seinem hinteren Ende ein Innenanschlagelement 412 aufweist, welches als auf seiner Innenseite als nach innen radial vorstehender Vorsprung ausgebildet ist. Das Zwischenmantelelement 42 weist an seinem vorderen Ende ein entsprechend ausgebildetes Außenanschlagelement 421 und seinem hinteren Ende ein entsprechend ausgebildetes Innenanschlagelement 422 auf. Die Lenkspindel 5 ist ebenfalls teleskopierbar aufgebaut mit einer inneren Lenkspindel 52 und einer äußeren Lenkspindel 53, die in Längsrichtung L ineinander verschiebbar sind und bezüglich einer Drehung zur Übertragung eines Lenkmoments formschlüssig verbunden sind.

Das Innenanschlagelement 422 des Zwischenmantelrohrs 42 hat einen freien Durchgangsquerschnitt, so dass das innere Mantelrohr 43 sich dadurch teleskopierend hindurchbewegen kann, wobei das Außenanschlagelement 431 am inneren Mantelrohr 43 so bemessen ist, dass es durch den Innenquerschnitt des Zwischenmantelrohrs 42 bewegbar ist, der größer ist als der freie Durchgangsquerschnitt des besagten Innenanschlagelements 422. Wird das innere Mantelrohr 43 aus dem Zwischenmantelrohr 42 von dem Stellantrieb 6 in Ausfahrrichtung A ausgefahren, wird die Ausfahrbewegung dadurch begrenzt, dass das Außenanschlagelement 431 in Ausfahrrichtung A axial an dem Innenanschlagelement 422 anschlägt.

Wird das Zwischenmantelrohr 43 beim Ausfahren durch das Außenanschlagelement 431 des inneren Mantelrohrs 43 mitgenommen, bewegt sich das Zwischenmantelrohr 42 in Ausfahrrichtung A teleskopierend aus dem äußeren Mantelrohr 41 heraus, bis es in gleicher Weise axial mit seinem Außenanschlagelement 421 am Innenanschlagelement 412 des äußeren Mantelrohrs 41 anschlägt, wodurch die Ausfahrbewegung des Zwischenmantelrohr 42 zum äußeren Mantelrohr 41 begrenzt wird.

Durch das vorangehend beschriebene Zusammenwirken der Innen- und Außenanschlagelemente 412, 421, 422 und 431 wird das Zwischenmantelrohr 42 beim teleskopierenden Ausfahren des inneren Mantelrohrs 43 aus dem äußeren Mantelrohr 41 der Manteleinheit 4 von dem inneren Mantelrohr 43 selbsttätig mitgenommen. Dabei kann eine Reihenfolge des Ausfahrens dadurch bestimmt werden, dass die Reibungskraft zwischen innerem Mantelrohr 43 und Zwischenmantelrohr 42 größer ist als zwischen Zwischenmantelrohr 42 und dem äußeren Mantelrohr 41, wodurch das Zwischenmantelrohr 42 zuerst bis zum oben beschriebenen axialen Anschlag aus dem äußeren Mantelrohr 41 herausbewegt wird, und erst dann das innere Mantelrohr 43 ausgefahren wird.

Alternativ kann die Reibungskraft zwischen innerem Mantelrohr 43 und Zwischenmantelrohr kleiner vorgegeben werden als zwischen dem Zwischenmantelrohr 42 und dem äußeren Mantelrohr 41, wodurch das innere Mantelrohr 43 zuerst ausgefahren wird.

Eine Verstellung des Lenkrads in Höhenrichtung H kann durch eine Drehbewegung des Stellhebels 23 um die Achse 24 bewirkt werden. Hierzu ist ein zweiter Stellantrieb 7 vorgesehen, der ähnlich aufgebaut ist wie der Stellantrieb 6, mit einer Schraubspindel 71, einer Spindelmutter 72, einem elektrischen Stellmotor 73 und einem Getriebe 74. Hierbei wird die Schraubspindel 71 von dem Stellmotor 73 über das Getriebe 74, welches sich an dem äußeren Mantelrohr 41 der Stelleinheit 3 abstützt, drehend angetrieben, und die Spindelmutter 72 ist drehfest mit dem Stellhebel 23 verbunden. Dadurch bewirkt ein drehender Antrieb der Schraubspindel 71 eine translatorische Verlagerung der Spindelmutter 72, die über den Stellhebel 23 in eine Bewegung der Stelleinheit 3 in Höhenrichtung H umgesetzt wird.

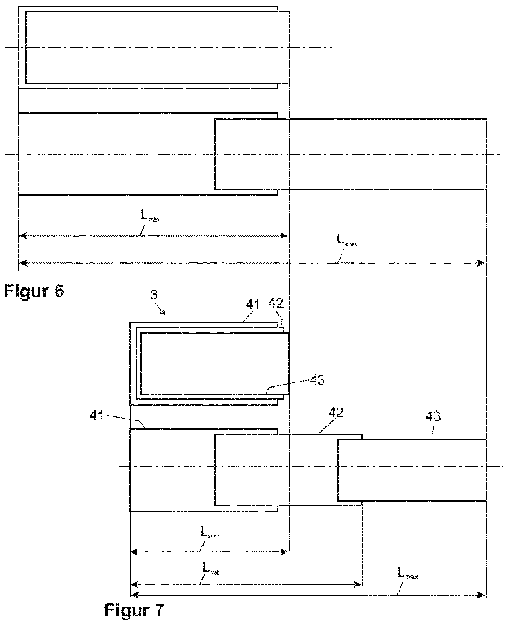

Der prinzipielle Vorteil durch das erfindungsgemäße Zwischenmantelrohr 42 ist schematisch in Figur 6 und 7 erläutert, wobei Figur 6 den Stand der Technik darstellt. In den schematischen Darstellungen bezeichnet Lₘᵢₙ jeweils die Länge der Stelleinheit 3 in maximal eingefahrenem Zustand und Lₘₐₓ in maximal ausgefahrenem Zustand. Lₘᵢₜ entspricht dem maximal ausgefahrenem Zustand des Zwischenmantelrohrs 42 aus dem äußeren Mantelrohr 41. In einem realistischen Fallbeispiel ergibt sich für den relativen Verstellweg der Teleskopanordnung gemäß der weiter oben angegebenen Definition für die Lenksäule nach dem Stand der Technik in Figur 6 ein Wert von Lₘₐₓ : Lₘᵢₙ ≈ 1,5 , während unter ansonsten gleichen Randbedingungen für eine erfindungsgemäße Lenksäule gemäß Figur 7 ein Wert von Lₘₐₓ : Lₘᵢₙ ≈ 2,0 erreicht wird. Dabei ist bei gleichem absoluten Verstellweg der erforderliche Bauraum in eingefahrenem Zustand deutlich kleiner, so dass insbesondere bei Anwendungen im Bereich des autonomen Fahrens eine verbesserte alternative Raumnutzung ermöglicht wird. Somit wird ersichtlich, dass sich das Verhältnis V wie folgt ergibt: V= (Lₘᵢₜ-Lₘᵢₙ)/(Lₘₐₓ-Lₘᵢₙ).

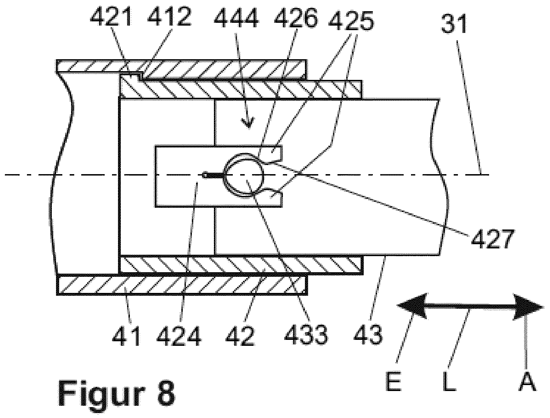

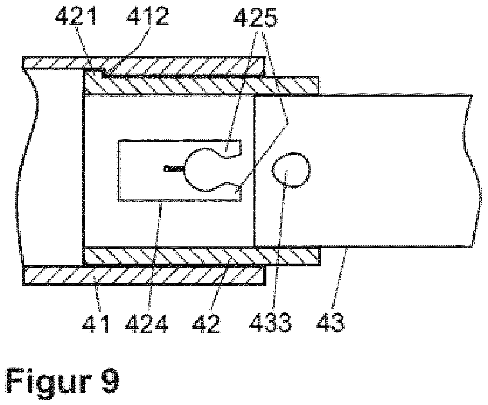

In den Figuren 8 und 9 ist eine schematische Schnittdarstellung der Manteleinheit 4 mit einer Rastvorrichtung 444 im eingerasteten Zustand und im ausgerasteten Zustand dargestellt. Dabei ist das Zwischenmantelrohr 42 mit dem Rastkörper 424 verbunden und der bolzenförmig ausgebildete Gegenrastkörper 433 ist mit dem inneren Mantelrohr 43 verbunden. Das Rastkörper 424 umfasst zwei Federzungen 425, welche den Gegenrastkörper 433 aus dem Rastkörper 424 ausrasten lassen, wenn das Außenanschlagelement 421 des Zwischenmantelrohrs 42 an das Innenanschlagelements 412 des äußeren Mantelrohrs 41 anschlägt. Nach dem Ausrasten von Rastkörper 424 und Gegenrastkörper 433 kann das innere Mantelrohr 43 aus dem Zwischenmantelrohr 42 heraus teleskopieren. Die Federzunge 425 weist eine erste Kontaktfläche 426 und eine zweite Kontaktfläche 427 auf, wobei das Gegenanschlagelement 433 beim Ausrasten mit der ersten Kontaktfläche 426 in Kontakt tritt und beim Einrasten mit der zweiten Kontaktfläche 427 in Kontakt tritt. Der Winkel zwischen der zweiten Kontaktfläche 427 und der Längsachse 31 ist kleiner, d.h. spitzer als der Winkel zwischen der ersten Kontaktfläche 426 und der Längsachse 31. Dadurch kann erreicht werden, dass die Kraft, die zum Einrasten benötigt wird, geringer ist als die Kraft, die zum Ausrasten erforderlich ist. Bevorzugt ist der Rastkörper 424 aus Kunststoff ausgebildet.

**Bezugszeichenliste**

| | | | |
|---|---|---|---|
| 1 | Lenksäule | 433 | Gegenrastkörper |
| 2 | Trageinheit | 444 | Rastvorrichtung |
| 21 | Befestigungsmittel | 5 | Lenkspindel |
| 22 | Schwenkachse | 51 | Befestigungsabschnitt |
| 23 | Stellhebel | 52 | inneren Lenkspindel |
| 24 | Achse | 53 | äußere Lenkspindel |
| 3 | Stelleinheit | 6, 7 | Stellantrieb |
| 31 | Längsachse | 61, 71 | Schraubspindel |
| 4 | Manteleinheit | 62, 72 | Spindelmutter |
| 41 | äußeres Mantelrohr | 63, 73 | Stellmotor |
| 412 | Innenanschlagelement | 64, 74 | Getriebe |
| 42 | Zwischenmantelrohr | | |
| 421 | Außenanschlagelement | H | Höhenrichtung |
| 422 | Innenanschlagelement | L | Längsrichtung |
| 424 | Rastkörper | E | Einfahrrichtung |
| 425 | Federzunge | A | Ausfahrrichtung |
| 426 | erste Kontaktfläche | V | Längenverhältnis |
| 427 | zweite Kontaktfläche | Lₘₐₓ | maximale Länge |
| 43 | inneres Mantelrohr | Lₘᵢₙ | minimale Länge |
| 431 | Außenanschlagelement | Lₘᵢₜ | mittlere Läng |

## Patentansprüche

1. Motorisch verstellbare Lenksäule (1) für ein Kraftfahrzeug, umfassend eine mit einer Fahrzeugkarosserie verbindbare Trageinheit (2), von der eine Stelleinheit (3) gehalten wird, die eine in einer Manteleinheit (4) um eine Längsachse (31) drehbar gelagerte Lenkspindel (5) umfasst, wobei die Manteleinheit (4) ein äußeres Mantelrohr (41) aufweist, in dem ein inneres Mantelrohr (43) teleskopierend axial verschiebbar aufgenommen ist, und mit einem Stellantrieb (6), der mit dem inneren (43) und dem äußeren Mantelrohr (41) verbunden ist und von dem das innere Mantelrohr (43) relativ zum äußeren Mantelrohr (41) axial ein- und ausfahrbar ist,
**dadurch gekennzeichnet,**
**dass** koaxial zwischen dem äußeren Mantelrohr (41) und dem inneren Mantelrohr (43) zumindest ein Zwischenmantelrohr (42) angeordnet ist, das in dem äußeren Mantelrohr (41) teleskopierend axial verschiebbar aufgenommen ist und in dem das innere Mantelrohr (43) teleskopierend axial verschiebbar aufgenommen ist.

2. Lenksäule, nach Anspruch 1, **dadurch gekennzeichnet, dass** die Manteleinheit (4) eine minimale Länge (Lₘᵢₙ) und eine maximale Länge (Lₘₐₓ) aufweist und das Zwischenmantelrohr (42) einen maximalen axialen Weg (Lₘᵢₜ-Lₘᵢₙ) verschiebbar ist, wobei ein Verhältnis (V) aus dem maximalen Weg (Lₘᵢₜ-Lₘᵢₙ) zu der Differenz aus der maximalen Länge (Lₘₐₓ) und der minimalen Länge (Lₘᵢₙ) einen Wert zwischen 0,2 und 0,8 aufweist.

3. Lenksäule, nach einem der vorangehenden Ansprüche, **dadurch gekennzeichnet, dass** bezüglich einer axialen Verschiebung eine erste Reibungskraft zwischen dem Zwischenmantelrohr (42) und dem äußeren Mantelrohr (41) kleiner ist als eine zweite Reibungskraft zwischen dem Zwischenmantelrohr (42) und dem inneren Mantelrohr (43).

4. Lenksäule, nach einem der vorangehenden Ansprüche, **dadurch gekennzeichnet, dass** das Zwischenmantelrohr (42) auf seiner Außenseite ein nach außen vorstehendes Außenanschlagelement (421) aufweist, und das äußere Mantelrohr (41) ein nach innen vorstehendes Innenanschlagelement (412), wobei der Durchgangsquerschnitt des Innenanschlagelements (412) größer ist als der Querschnitt des Zwischenmantelrohrs (42) und kleiner als der Querschnitt des Außenanschlagelements (421) des Zwischenmantelrohrs (42).

5. Lenksäule, nach einem der vorangehenden Ansprüche, **dadurch gekennzeichnet, dass** das Zwischenmantelrohr (42) auf seiner Innenseite ein nach innen vorstehendes Innenanschlagelement (422) aufweist, und das innere Mantelrohr (43) ein nach außen vorstehendes Außenanschlagelement (431), wobei der Durchgangsquerschnitt des Innenanschlagelements (422) größer ist als der Querschnitt des inneren Mantelrohrs (43) und kleiner als der Querschnitt des Außenanschlagelements (431) des inneren Mantelrohrs (43).

6. Lenksäule, nach einem der vorangehenden Ansprüche, **dadurch gekennzeichnet, dass** das Zwischenmantelrohr (42) und das innere Mantelrohr (43) mittels einer Rastvorrichtung (444) verbindbar ist, wobei die Rastvorrichtung (444) einen Rastkörper (424), der mit dem Zwischenmantelrohr verbunden ist, und einem zum Rastkörper (424) korrespondierenden Gegenrastkörper (433), der mit dem inneren Mantelrohr (43) verbunden ist, umfasst.

7. Lenksäule, nach einem der vorangehenden Ansprüche, **dadurch gekennzeichnet, dass** der Stellantrieb (6) mit dem Zwischenmantelrohr (42) wirkverbunden ist zur Zwangspositionierung des Zwischenmantelrohrs (42) relativ zum inneren und/oder äußeren Mantelrohr (43 / 41).

8. Lenksäule, nach einem der vorangehenden Ansprüche, **dadurch gekennzeichnet, dass** der Stellantrieb (6) einen Spindeltrieb umfasst mit einer auf einer Schraubspindel (61) angeordneten Spindelmutter (62), und einen elektrischen Stellmotor (63), von dem die Schraubspindel (61) und die Spindelmutter (62) relativ zueinander drehend antreibbar sind.

9. Lenksäule, nach Anspruch 8, **dadurch gekennzeichnet, dass** der Spindeltrieb ein Getriebe (64) umfasst, welches zwischen der Motorwelle des elektrischen Stellmotors (63) und der Schraubspindel (61) oder der Spindelmutter (62) angeordnet ist.

10. Lenksäule, nach einem der vorangehenden Ansprüche, **dadurch gekennzeichnet, dass** die Stelleinheit (3) an der Trageinheit (2) um eine quer zur Längsachse liegende Schwenkachse (22) höhenverschwenkbar gelagert ist.

11. Lenksäule, nach Anspruch 10, **dadurch gekennzeichnet, dass** ein elektrischer Höhen-Stellantrieb (7) mit der Trageinheit (2) und der Stelleinheit (3) verbunden ist, von dem die Stelleinheit (3) relativ zur Trageinheit (2) um die Schwenkachse (22) bewegbar ist.

## Claims

1. Motor-adjustable steering column (1) for a motor vehicle, comprising a support unit (2) which is connectable to a vehicle body and holds an adjustment unit (3), which adjustment unit comprises a steering spindle (5) which is mounted in a casing unit (4) so as to be rotatable about a longitudinal axis (31), wherein the casing unit (4) comprises an outer casing tube (41) in which an inner casing tube (43) is received so as to be axially displaceable in telescopic fashion, and comprising an adjustment drive (6) which is connected to the inner (43) and the outer casing tube (41) and of which the inner casing tube (43) can be retracted and deployed axially relative to the outer casing tube (41),
**characterized**
**in that**, coaxially between the outer casing tube (41) and the inner casing tube (43), there is arranged at least one intermediate casing tube (42) which is received in the outer casing tube (41) so as to be axially displaceable in telescopic fashion and in which the inner casing tube (43) is received so as to be axially displaceable in telescopic fashion.

2. Steering column according to Claim 1, **characterized in that** the casing unit (4) comprises a minimum length (Lₘᵢₙ) and a maximum length (Lₘₐₓ), and the intermediate casing tube (42) is displaceable a maximum axial travel (Lₘᵢₜ-Lₘᵢₙ), wherein a ratio (V) of the maximum travel (Lₘᵢₜ-Lₘᵢₙ) to the difference between the maximum length (Lₘₐₓ) and the minimum length (Lₘᵢₙ) comprises a value between 0.2 and 0.8.

3. Steering column according to one of the preceding claims, **characterized in that**, with regard to an axial displacement, a first friction force between the intermediate casing tube (42) and the outer casing tube (41) is lower than a second friction force between the intermediate casing tube (42) and the inner casing tube (43).

4. Steering column according to one of the preceding claims, **characterized in that** the intermediate casing tube (42) comprises an outwardly protruding outer stop element (421) on its outer side, and the outer casing tube (41) comprises an inwardly protruding inner stop element (412), wherein the passage cross section of the inner stop element (412) is larger than the cross section of the intermediate casing tube (42) and smaller than the cross section of the outer stop element (421) of the intermediate casing tube (42).

5. Steering column according to one of the preceding claims, **characterized in that** the intermediate casing tube (42) comprises an inwardly protruding inner stop element (422) on its inner side, and the inner casing tube (43) comprises an outwardly protruding outer stop element (431), wherein the passage cross section of the inner stop element (422) is larger than the cross section of the inner casing tube (43) and smaller than the cross section of the outer stop element (431) of the inner casing tube (43).

6. Steering column according to one of the preceding claims, **characterized in that** the intermediate casing tube (42) and the inner casing tube (43) are connectable by means of a latching device (444), wherein the latching device (444) comprises a latching body (424), which is connected to the intermediate casing tube, and a counterpart latching body (433), which corresponds to the latching body (424) and which is connected to the inner casing tube (43).

7. Steering column according to one of the preceding claims, **characterized in that** the adjustment drive (6) is operatively connected to the intermediate casing tube (42) for the constrained positioning of the intermediate casing tube (42) relative to the inner and/or outer casing tube (43/41).

8. Steering column according to one of the preceding claims, **characterized in that** the adjustment drive (6) comprises a spindle drive, having a spindle nut (62), which is arranged on a threaded spindle (61), and having an electric adjustment motor (63), by which the threaded spindle (61) and the spindle nut (62) can be driven in rotation relative to one another.

9. Steering column according to Claim 8, **characterized in that** the spindle drive comprises a gear mechanism (64) which is arranged between the motor shaft of the electric adjustment motor (63) and the threaded spindle (61) or the spindle nut (62).

10. Steering column according to one of the preceding claims, **characterized in that** the adjustment unit (3) is mounted on the support unit (2) so as to be pivotable in height about a pivot axis (22) lying transversely with respect to the longitudinal axis.

11. Steering column according to Claim 10, **characterized in that** an electric height adjustment drive (7) is connected to the support unit (2) and to the adjustment unit (3), by means of which electric height adjustment drive the adjustment unit (3) is movable relative to the support unit (2) about the pivot axis (22).

## Revendications

1. Colonne de direction (1) réglable par moteur pour un véhicule automobile, comprenant une unité de support (2) pouvant être connectée à une carrosserie de véhicule, par laquelle est retenue une unité de réglage (3) qui comprend un arbre de direction (5) supporté dans une unité d'enveloppe (4) de manière à pouvoir tourner autour d'un axe longitudinal (31), l'unité d'enveloppe (4) présentant un tube d'enveloppe extérieur (41) dans lequel est reçu de manière déplaçable axialement et de manière télescopique un tube d'enveloppe intérieur (43), et comprenant un entraînement de réglage (6) qui est connecté au tube d'enveloppe intérieur (43) et au tube d'enveloppe extérieur (41) et par lequel le tube d'enveloppe intérieur (43) peut être rentré et sorti axialement par rapport au tube d'enveloppe extérieur (41),
**caractérisée en ce**
**qu'**au moins un tube d'enveloppe intermédiaire (42) est disposé coaxialement entre le tube d'enveloppe extérieur (41) et le tube d'enveloppe intérieur (43), lequel est reçu de manière déplaçable axialement et de manière télescopique dans le tube d'enveloppe extérieur (41) et dans lequel le tube d'enveloppe intérieur (43) est reçu de manière déplaçable axialement et de manière télescopique.

2. Colonne de direction selon la revendication 1, **caractérisée en ce que** l'unité d'enveloppe (4) présente une longueur minimale (Lₘᵢₙ) et une longueur maximale (Lₘₐₓ) et le tube d'enveloppe intermédiaire (42) peut être déplacé une course axiale maximale (Lₘᵢₜ-Lₘᵢₙ), un rapport (V) de la course maximale (Lₘᵢₜ-Lₘᵢₙ) à la différence entre la longueur maximale (Lₘₐₓ) et la longueur minimale (Lₘᵢₙ) présentant une valeur comprise entre 0,2 et 0,8.

3. Colonne de direction selon l'une quelconque des revendications précédentes, **caractérisée en ce que** par rapport à un déplacement axial, une première force de friction entre le tube d'enveloppe intermédiaire (42) et le tube d'enveloppe extérieur (41) est inférieure à une deuxième force de friction entre le tube d'enveloppe intermédiaire (42) et le tube d'enveloppe intérieur (43).

4. Colonne de direction selon l'une quelconque des revendications précédentes, **caractérisée en ce que** le tube d'enveloppe intermédiaire (42) présente, sur son côté extérieur, un élément de butée extérieur (421) faisant saillie vers l'extérieur, et le tube d'enveloppe extérieur (41) présente un élément de butée intérieur (412) faisant saillie vers l'intérieur, la section transversale de passage de l'élément de butée intérieur (412) étant supérieure à la section transversale du tube d'enveloppe intermédiaire (42) et étant inférieure à la section transversale de l'élément de butée extérieur (421) du tube d'enveloppe intermédiaire (42) .

5. Colonne de direction selon l'une quelconque des revendications précédentes, **caractérisée en ce que** le tube d'enveloppe intermédiaire (42) présente, sur son côté intérieur, un élément de butée intérieur (422) faisant saillie vers l'intérieur, et le tube d'enveloppe intérieur (43) présente un élément de butée extérieur (431) faisant saillie vers l'extérieur, la section transversale de passage de l'élément de butée intérieur (422) étant supérieure à la section transversale du tube d'enveloppe intérieur (43) et étant inférieure à la section transversale de l'élément de butée extérieur (431) du tube d'enveloppe intérieur (43) .

6. Colonne de direction selon l'une quelconque des revendications précédentes, **caractérisée en ce que** le tube d'enveloppe intermédiaire (42) et le tube d'enveloppe intérieur (43) peuvent être connectés au moyen d'un dispositif d'encliquetage (444), le dispositif d'encliquetage (444) comprenant un corps d'encliquetage (424) qui est connecté au tube d'enveloppe intermédiaire et un corps d'encliquetage conjugué (433) correspondant au corps d'encliquetage (424), qui est connecté au tube d'enveloppe intérieur (43).

7. Colonne de direction selon l'une quelconque des revendications précédentes, **caractérisée en ce que** l'entraînement de réglage (6) est en liaison fonctionnelle avec le tube d'enveloppe intermédiaire (42) pour le positionnement forcé du tube d'enveloppe intermédiaire (42) par rapport au tube d'enveloppe intérieur et/ou extérieur (43/41).

8. Colonne de direction selon l'une quelconque des revendications précédentes, **caractérisée en ce que** l'entraînement de réglage (6) comprend un entraînement à broche avec un écrou de broche (62) disposé sur une broche filetée (61) et un moteur de commande électrique (63) par lequel la broche filetée (61) et l'écrou de broche (62) peuvent être entraînés en rotation l'un par rapport à l'autre.

9. Colonne de direction selon la revendication 8, **caractérisée en ce que** l'entraînement à broche comprend un engrenage (64) qui est disposé entre l'arbre de moteur du moteur de commande électrique (63) et la broche filetée (61) ou l'écrou de broche (62).

10. Colonne de direction selon l'une quelconque des revendications précédentes, **caractérisée en ce que** l'unité de réglage (3) est supportée sur l'unité de support (2) de manière à pouvoir pivoter en hauteur autour d'un axe de pivotement (22) situé transversalement à l'axe longitudinal.

11. Colonne de direction selon la revendication 10, **caractérisée en ce qu'**un entraînement de réglage en hauteur électrique (7) est connecté à l'unité de support (2) et à l'unité de réglage (3), par lequel l'unité de réglage (3) peut être déplacée par rapport à l'unité de support (2) autour de l'axe de pivotement (22).
